# EUROPEAN PATENT SPECIFICATION

(11) **EP 4 493 350 B1**
(45) Date of publication and mention of the grant of the patent: **04.02.2026**
(21) Application number: 23710025.0
(22) Date of filing: 13.03.2023
(51) Int. Cl.: B23K 26/20, B23K 26/38, B23K 26/70, H02P 3/14

(54) **LASER MACHINING TOOL AND METHOD FOR OPERATING THE LASER MACHINING TOOL**
LASERBEARBEITUNGSMASCHINE UND VERFAHREN ZUM BETREIBEN DER LASERBEARBEITUNGSMASCHINE
MACHINE D'USINAGE LASER ET PROCÉDÉ DE FONCTIONNEMENT DE LA MACHINE D'USINAGE LASER

(30) Priority: 18.03.2022 EP 22162976
(43) Date of publication of application: 22.01.2025
(73) Proprietor: Bystronic Laser AG, 3362 Niederönz (CH)
(72) Inventor: LECHTHALER, Iso, 3360 Herzogenbuchsee (CH)
(74) Representative: Fink Numrich Patentanwälte PartmbB
(86) International application number: PCT/EP2023/056276
(87) International publication number: WO 2023/174835

(56) References cited:
- EP-A1- 2 372 892
- EP-A1- 3 892 414
- DE-A1- 102016 107 419
- DE-A1- 102020 004 238
- FERREIRA FERNANDO J.T.E. ET AL: "Reducing Energy Costs in Electric-Motor-Driven Systems: Savings Through Output Power Reduction and Energy Regeneration", vol. 24, no. 1, 1 January 2018 (2018-01-01), US, pages 84 - 97, XP055965292, ISSN: 1077-2618, Retrieved from the Internet <URL:https://ieeexplore.ieee.org/stampPDF/getPDF.jsp?tp=&arnumber=8023737&ref=aHR0cHM6Ly9pZWVleHBsb3JlLmllZWUub3JnL2Fic3RyYWN0L2RvY3VtZW50LzgwMjM3Mzc=> [retrieved on 20220927], DOI: 10.1109/MIAS.2016.2600685

## Description

The present invention relates to a laser machining tool, in particular a laser cutting machine, having a machining unit that can be moved linearly in at least one direction relative to a working plane of the laser machining tool by means of an electric motor in each case. The invention also relates to a method for operating such a laser machining tool.

Laser machining tools are used to machine workpieces, e.g. to cut sheet metal, using high-energy laser light. The machining unit is generally mounted on a movable carriage and has a machining head that generates a laser beam for machining the workpiece from laser light. The machining unit can also be moved relative to the movable carriage to change the position of the machining head, wherein electric motors associated with the respective components are used to drive them. Each electric motor is supplied with energy by a drive controller, which is designed, for example, as an (indirect) converter with a DC link.

Typically, the drive controller for each electric motor comprises a mains-connected rectifier that supplies the DC link with a voltage, and an inverter which is connected to the electric motor and operates the electric motor with the DC voltage from the DC link. Depending on the operating state of the electric motor, either energy is fed from the rectifier into the DC link in order to supply the motor with energy in so-called motor mode, or braking energy is fed from the motor into the intermediate circuit when the motor is operated in so-called generator mode. In order to be able to dissipate the energy generated during generator mode from the drive controller, a resistor (so-called braking resistor) is arranged in the DC link.

A method for energy recovery from a laser machining tool is known from US 2011/0024401 A1, in which thermal energy is removed from the laser machining tool during operation and fed back via one or more energy recovery systems. Energy recovery is the use of residual (or unused) energy that does not serve the actual purpose of the laser machining tool. The remaining energy is primarily thermal energy, which arises preferably in the resonator, particularly preferably in the laser medium. Mechanical energy or electrical energy or magnetic energy, for example, are listed as other remaining forms of energy in the laser machining tool. The energy recovery system can be designed in a thermodynamic, for example as a heat engine, physical/chemical, thermoelectric, biological or chemical manner. In the course of energy recovery, conversion from one form of energy into another form of energy is also possible. In general, conversion into electrical energy and/or mechanical energy and/or pressure and/or magnetic energy is proposed. The recovery of residual thermal energy and its return to the laser machining tool using an energy recovery system is difficult to implement in practice.

EP 3 892 414 A1, on which the preamble of the independent claims is based, describes a laser machining tool, in particular a laser cutting machine, with a machining unit which can be moved linearly relative to a working plane of the laser machining tool in at least one direction by means of a respective electric motor, each of the electric motors being supplied with power during operation from an associated drive control system.

DE 10 2020 004 238 A1 discloses a welding robot. Recuperated energy of at least one motor is stored in an energy storage. The electrical energy contained in the energy storage unit is taken from it as electrical welding energy, i.e. as welding current, and fed to a welding unit via power electronics to control the welding process.

It is the object of the invention to specify a laser machining tool and a method for operating a laser machining tool which are structurally and/or functionally improved in such a way that high energy efficiency is made possible during operation.

These objects are achieved by a laser machining tool according to the features of claim 1 and a method for operating a laser machining tool according to the features of claim 11. Advantageous configurations arise from the dependent claims.

The laser machining tool according to the invention has a machining unit which can be moved linearly in at least one direction relative to a working plane of the laser machining tool by means of an electric motor in each case. During operation, each of the electric motors is supplied with energy from an assigned drive controller, which includes a DC link. The drive controller comprising the DC link is preferably an indirect converter.

The machining unit can have a machining head which is designed in such a way that, when the laser machining tool is in operation, it directs a laser beam of laser light onto a workpiece to be machined, which is arranged in the working plane of the laser machining tool. The laser machining tool is preferably a laser cutting machine for cutting workpieces and, in particular, sheets or tubular bodies made of metal. In this case, the machining head is a cutting head, the laser beam of which cuts the corresponding workpiece.

In the laser machining tool according to the invention, the DC link has an energy storage system which is designed to temporarily store braking energy of an electric motor fed into the DC link during operation of the laser machining tool and to release the temporarily stored energy into the DC link, when there is a demand for power from an electric motor, to drive said electric motor. Braking energy of an electric motor is generated, for example, during generator mode of the electric motor as a result of the dissipation of kinetic energy of the machining unit.

The laser machining tool according to the invention has the advantage that the braking energy arising when braking an electric motor is temporarily stored in the energy storage system and can be used again at a later point in time to drive the electric motor. There is no need to convert one form of energy into another form of energy, which means that only minor modifications to the electrical system of the laser machining tool are required and energy losses are minimised. In addition to operating with high efficiency, the laser machining tool can be provided at low cost.

A particular advantage is that the laser machining tool can be operated more energy-efficiently with reduced energy consumption. In particular, the load on the supply network feeding the laser machining tool can be reduced. Owing to the reduced primary power consumption from the supply network feeding the laser machining tool, the power that has to be converted in the drive controller is also reduced. This reduces the waste heat output of the drive controller, with the positive result of a reduced thermal load on the components of the drive controller. As a result, a necessary cooling power for cooling the components of the drive controller can also be reduced. In addition to a more positive effect on the environment, the manufacturing costs of the laser machining tool are reduced while the service life of the drive controller components is increased at the same time.

In an expedient embodiment, the energy storage system has an energy store which is connected to the DC link via a DC-to-DC converter of the energy storage system. Via the DC-to-DC converter, the energy store can absorb energy during the generator mode of an electric motor and release energy during the motor mode.

According to a further expedient configuration, the energy storage system has a capacitive energy store, in particular a capacitor or a supercapacitor, or a rechargeable battery as the energy store. Capacitive energy stores and rechargeable batteries are advantageously able to receive and store or release large amounts of energy in a short period of time. At the same time, these are available in different sizes at economical prices, so they can be easily integrated into the laser machining tool.

In an alternative or additional configuration, the energy storage system can have a mass inertia store as the energy store. A mass inertia store, which constitutes a kinetic energy store, is also able to receive or release large amounts of energy in a short period of time. At the same time, these can be provided as maintenance-free energy stores.

According to a further expedient embodiment, the energy store has a voltage measuring device for determining the intermediate circuit voltage and a control device, to which the intermediate circuit voltage of the control device detected by the voltage measuring device is supplied as input information. The control device is designed to control the energy flow direction, in particular by controlling the DC-to-DC converter, from or into the DC link according to a comparison of the intermediate circuit voltage with a predetermined threshold value.

This procedure is based on the principle that energy fed into the DC link or energy drawn from the DC link causes the intermediate circuit voltage to fluctuate. For example, the braking energy of an electric motor fed into the DC link leads to a (temporary) increase in the intermediate circuit voltage in the DC link. If the intermediate circuit voltage exceeds a predetermined threshold value, the energy contained in the DC link can be fed into the energy storage system by suitable control of the DC-to-DC converter. On the other hand, if the intermediate circuit voltage present in the intermediate DC circuit falls, e.g. due to energy being drawn from the DC link when an electric motor is driven, the voltage in the DC link is stabilised (through suitable control of the DC-to-DC converter) by the energy contained in the energy storage system until this is no longer possible due to the discharge of the energy storage system. As a result, the intermediate circuit voltage of the DC link drops further, such that finally energy is transferred from the supply network into the DC link via the drive controller.

It is expedient if the predetermined threshold value is greater than a nominal intermediate circuit voltage. In particular, tests have shown it to be expedient if the predetermined threshold value is between 5% and 10% greater than the nominal intermediate circuit voltage. In a typical laser machining tool, the nominal intermediate circuit voltage is between 600 V and 800 V.

According to a further expedient embodiment, in the case of a plurality of electric motors, each associated drive controller has its own energy storage system. In other words, one energy storage system is provided for each electric motor. Each energy storage system is connected to its own DC link.

In an alternative embodiment, it is possible, in the case of a plurality of electric motors, for all drive controllers to use a common intermediate circuit, wherein a common energy storage system is connected to the common intermediate circuit. This variant provides the advantage that the energy recovery from braking energy can be realised with a small number of additional electrical components. Since a plurality of electric motors can feed energy into the energy storage system, it is expedient if the energy store of the energy storage system is adapted with respect to its size in this variant, since simultaneous braking or driving operation of a plurality of electric motors is possible.

In accordance with the method according to the invention for operating a laser machining tool as described above, during operation of the laser machining tool, braking energy of an electric motor that is fed into the DC link is temporarily stored, and the temporarily stored energy is released into the DC link, when there is a demand for power from an electric motor, to drive said electric motor. The method according to the invention has the same advantages as were described above in connection with the laser machining tool according to the invention.

According to a further expedient embodiment of the method according to the invention, a voltage measuring device of the energy storage system determines the intermediate circuit voltage and supplies this to a control device as input information, wherein the control device controls the energy flow direction from or into the DC link according to a comparison of the intermediate circuit voltage with a predetermined threshold value.

Exemplary embodiments of the invention are described below in detail with reference to the accompanying drawings.

In the drawings:
- Fig. 1: shows a schematic perspective view of a laser machining tool, in which a machining unit can be moved linearly in different directions by means of a plurality of electric motors;
- Fig. 2: shows a drive controller known from the prior art for supplying an electric motor with energy;
- Fig. 3: shows an electrical equivalent circuit diagram of the drive controller shown in Fig. 2 according to the prior art;
- Fig. 4: shows a schematic representation of a drive controller according to the invention for supplying an electric motor with energy;
- Fig. 5: shows an electrical equivalent circuit diagram of the drive controller shown in Fig. 4;
- Fig. 6: shows a further exemplary embodiment in which a plurality of drive controllers use a common energy storage system.

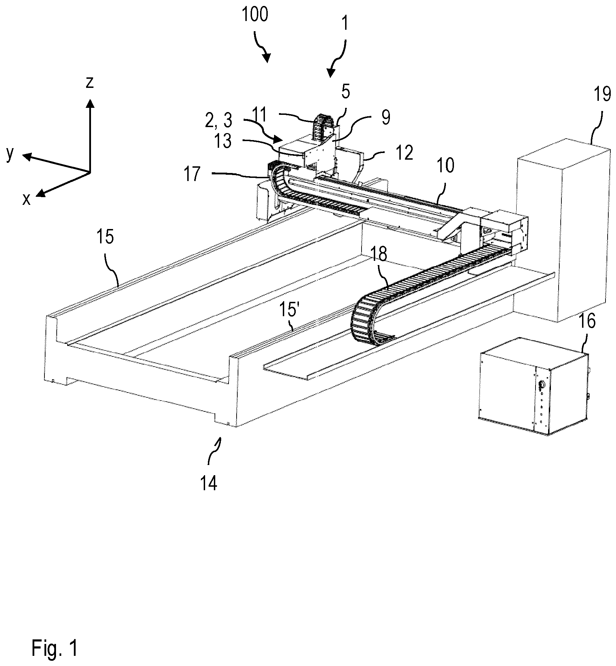

Fig. 1 shows a laser machining tool 100 known in principle from the prior art in the form of a laser cutting machine. The laser machining tool 100 is used to cut metal sheets using a machining device 1 via which a high-energy laser beam is directed onto the metal sheets in a working plane of the laser machining tool 100.

This machining device 1 has a movable carriage 2 which, in the embodiment described here, is designed as a transverse or cutting carriage and carries a machining unit 3 (not shown in detail). According to the Cartesian coordinate system shown in Fig. 1, the machining unit 3 can be moved in the vertical z-direction relative to the carriage 2 by means of an actuator system (not shown). The carriage 2 is arranged on a bridge 10 which, in the embodiment described here, is a cutting bridge. The carriage 2 can be moved along the bridge 10 by means of an actuator system (not shown) in the horizontal y-direction according to the coordinate system shown.

As can be seen from the view of the laser machining tool of Fig. 1, the bridge 10 can also be moved, specifically in the horizontal x-direction of the coordinate system shown, i.e. perpendicular to the travel path of the carriage 2. For this purpose, the bridge is arranged on a frame 14 having two supports 15 and 15' extending in the x-direction. The bridge 10 lies on these supports 15, 15' and can be moved in their longitudinal direction using a suitable actuator system (not shown).

Each of the actuator systems (not shown) comprises an electric motor and a drive controller that feeds the electric motor. In order to be able to move the machining unit 3 in each of the xyz directions, at least three electric motors are provided, which are not shown in detail in Fig. 1. The drive controllers for the electric motors are arranged in a control cabinet 19.

The machining unit 3 has, in a known manner, a machining head (not shown), which is designed, for example, as a cutting head and to which a fibre cable (not shown) is connected, via which laser light is supplied to the machining head. The laser light originates from a laser light source which is labelled with reference sign 16 in Fig. 1. In the machining head, there is an optical system which generates a laser beam from the laser light guided into the machining head via the fibre cable, which laser beam is directed downwards in the direction of the working plane. The sheet metal to be cut (not shown), which according to the representation in Fig. 1 is positioned between the supports 15 and 15' of the frame 14 in the xy-plane as the working plane of the laser machining tool 100, is located below the machining head during operation of the laser machining tool 100.

In addition to the fibre cable, the machining head is supplied in a manner known per se with further lines that are required for its operation. These lines (not shown here) comprise, inter alia, electrical lines for powering the electric motors, control cables and hoses for supplying compressed air and the gas required for the cutting process. The lines are guided separately to the fibre cable from the carriage 2 to the machining head via an energy chain 11 known per se. The energy chain 11 extends upwards in the z-direction and is also referred to as a z-axis cable carrier. The energy chain enables the lines guided therein to be shifted by changing their bending position when the machining head or the machining unit 3 moves relative to the carriage 2.

In the representation of Fig. 1, the laser machining tool 100 is shown from the perspective which illustrates the cable carrier along the bridge 10 and the frame 14. From this perspective, the machining device 1 is positioned behind the bridge 10 and is partially covered thereby. As a result, the machining head already described, which is located behind the bridge, is also not visible. According to Fig. 1, the fibre cable exits the carriage 2 via a slot 13, with the fibre cable being bent in such a way that it enters an energy chain 17 which extends in the horizontal y direction and is also referred to as a y-axis cable carrier. The other lines that reach the machining head via the z-axis cable carrier 11 are also guided within this energy chain in a manner known per se. The energy chain 17 ensures tracking of the lines or cables accommodated therein when the carriage 2 is moved. From the y-axis cable carrier, the cables pass via cable ducts known per se, which are not explained in more detail here, to a further energy chain 18, which is also referred to as an x-axis cable carrier and ensures tracking of the cables contained therein when the bridge 10 is moved in the x-direction. After exiting the x-axis cable carrier, the cables are guided, according to their function, to the control cabinet 19 for controlling the laser machining tool and/or to the laser light source 16 already mentioned above. This cable carrier is not shown in Fig. 1.

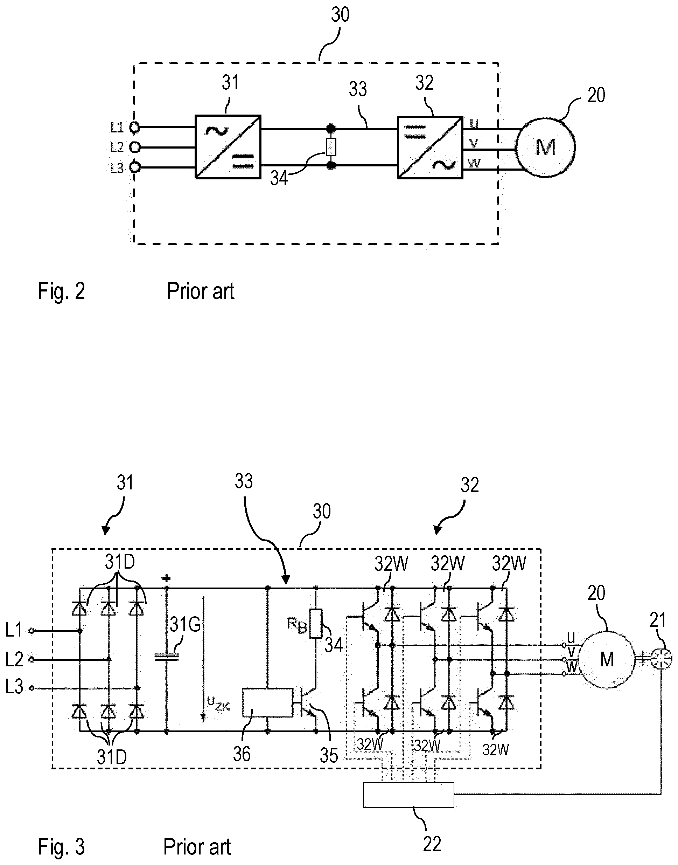

The electric motors of the actuator systems enable a linear movement of the machining unit 3 relative to the working plane (xy-plane). The supply of energy to the electric motors using an associated drive controller is explained in more detail below with reference to Figs. 2 to 6.

Fig. 2 shows a schematic representation of a drive controller 30, which is basically known from the prior art, in the form of an indirect converter. The drive controller 30 has a rectifier 31 in the form of a three-phase rectifier, which supplies a DC link 33 with DC voltage. The rectifier 31 is supplied with energy from a three-phase supply network (i.e. the mains), wherein the phases are labelled L1, L2, L3. An inverter 32 supplies energy to the electric motor 20 identified by reference sign 20 via its three phases U, V, W. The DC link 33 has a nominal intermediate circuit voltage U_{ZK} which is generally dependent on the dimensioning of the electric motor 20. In the case of the laser machining tool described in Fig. 1, the nominal intermediate circuit voltage U_{ZK} is usually between 600 V and 800 V. The nominal intermediate circuit voltage U_{ZK} drops across a resistor 34, which constitutes a braking resistor. In a simplified representation, the resistor 34 is connected between the terminals of the DC link 33.

To drive the electric motor 20, the DC link 33 is supplied with energy by the rectifier 31 from the mains (not shown in detail) (symbolised by its three phases L1, L2, L3) as soon as the intermediate circuit voltage U_{ZK} falls below a predetermined voltage. The predetermined voltage is lower than the nominal intermediate circuit voltage U_{ZK}.

During the generator mode of the electric motor 20, braking energy is fed back from the electric motor 20 into the DC link 33 so that its intermediate circuit voltage U_{ZK} increases, with the braking energy being converted into heat via the resistor 34. If the braking energy has not been dissipated via the resistor 34, the intermediate circuit voltage U_{ZK} could rise to an undesired level above the nominal intermediate circuit voltage U_{ZK}.

Fig. 3 shows an electrical equivalent circuit diagram of the drive controller 30 shown schematically in Fig. 2. For each phase L1, L2, L3, the rectifier 31 has two rectifying elements 31D connected in series with one another in the form of diodes. The phases L1, L2, L3 of the supply network are each connected to the nodes of the serially connected rectifying elements 31D. The connection ends of the series connection of the two rectifying elements 31D of each phase L1, L2, L3 are connected to the terminals of the DC link 33. On the output side of the rectifier 31, a smoothing capacitor 31G is connected between the terminals of the DC link 33 to smooth phase ripples. The intermediate circuit voltage U_{ZK} is present across the smoothing capacitor 31G, i.e. the outputs of the rectifier 31.

In a manner also known to the person skilled in the art, the inverter 32 has two controllable switching elements 32W for each phase U, V, W, the load paths of which are connected to one another in series. The switching elements 32W could be MOSFETs, bipolar transistors, IGBTs and the like. Each controllable switching element 32W has a flyback diode connected across the load path. This can be an integral part of a switching element or a discrete component. The conductors of the electric motor 20 are connected to the nodes of two switching elements 32W, which are connected to one another in series, of a phase U, V, W. The controllable switching elements 32W are actuated by means of a control apparatus 22, which receives, for example, a (motor) speed from a measuring apparatus 21 of the electric motor 20 as an input signal.

The resistor 34 shown only schematically in Fig. 2 is connected in series with a controllable switching element 35 in the electrical equivalent circuit diagram of Fig. 3. The switching element 35 can be a MOSFET or a bipolar transistor, for example. The series circuit of the resistor 34 and the load path of the switching element 35 is interconnected between the terminals of the DC link 33. The controllable switching element 35 is actuated via a measuring and control device 36, which switches the controllable switching element 35 on or off according to the metrologically determined level of the intermediate circuit voltage U_{ZK}.

It has already become clear from the above description that the controllable switching element 35 is switched to become conductive by the measuring and control device 36 when, as a result of braking energy fed into the DC link 33 by the electric motor 20, the intermediate circuit voltage U_{ZK} increases, e.g. above a predetermined threshold value. The energy contained in the DC link is then converted into heat via the braking resistor 34. When driving the electric motor 20 via the rectifier 31 from the supply network, the controllable switching element 35 is switched to a blocking state.

The electric motor 20 shown in Figs. 2 to 5 is representative of an electric motor of the actuator system for moving the machining unit 3 in the x or y or z-direction.

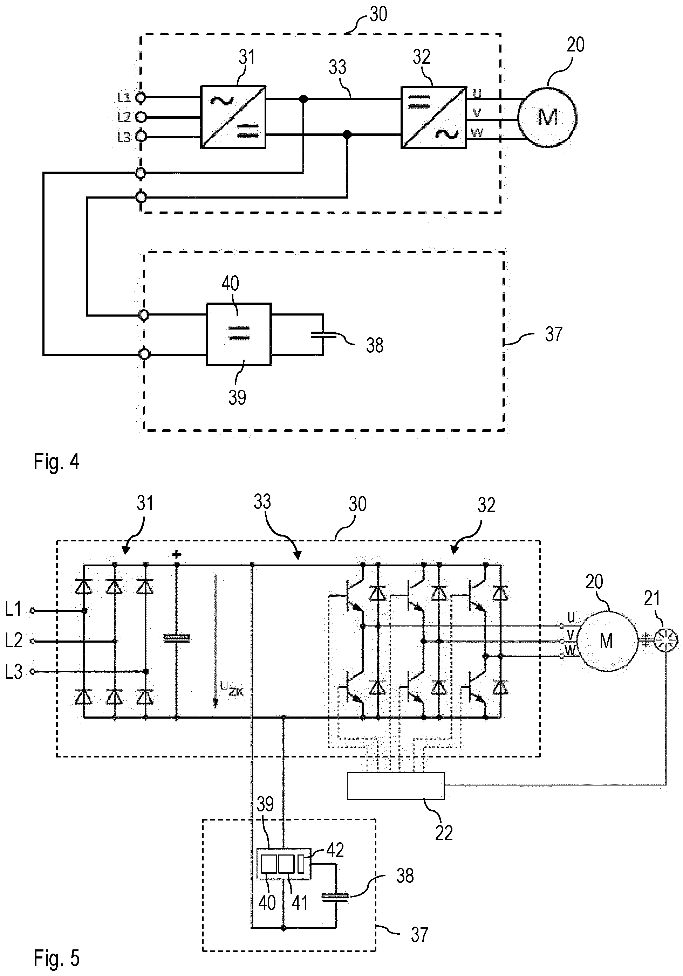

Instead of converting the braking energy of electric motor 20 into heat via the resistor 34, the laser machining tool 100 according to the invention has an energy storage system 37 (see Fig. 4), which is designed to temporarily store the braking energy of the electric motor 20 fed into DC link 33 during operation of laser machining tool 100 and to release the temporarily stored energy again, when there is a demand for power from the electric motor 20, into the DC link 33 to drive said electric motor.

For this purpose, the energy storage system 37 has an energy store 38. The energy store can, for example, be a capacitive energy store, for example a capacitor or a supercapacitor. The energy store can also be a rechargeable battery, for example a lithium rechargeable battery. Alternatively, the energy store 38 could also be designed as a kinetic energy store, for example in the form of a mass inertia store. The energy store 38 is connected to the DC link 33 via a DC-to-DC converter 40. The DC-to-DC converter 40 makes it possible, depending on the intermediate circuit voltage U_{ZK} prevailing in the DC link 33, to charge the energy store 38 when braking energy is fed in or, in the case of a demand for power from the electric motor 20, to discharge it. The energy storage system 37, although shown in Fig. 4 outside of the drive controller 30, is part of the drive controller 30. The representation has been chosen solely for graphic reasons.

Fig. 5 shows an electrical equivalent circuit diagram of the drive controller 30 used in a laser machining tool 100 according to the invention with the energy storage system 37 according to the invention. In this case, the rectifier 31 and the inverter 32 are designed as indirect converters in a known manner, as in Fig. 3, so these components are shown without reference signs in Fig. 5 for reasons of simplification. The energy storage system 37 is connected to the phases of the DC link 33. The energy storage system 37 has the energy store 38 and a measuring and control device 39. The measuring and control device 39 has the already mentioned DC-to-DC converter 40 as well as a voltage measuring device and a control device 42.

The mode of operation is as follows: Depending on the nominal power consumption of the electric motor 20, the DC link 33 has a nominal intermediate circuit voltage U_{ZK,nom}. This is typically between 600 V and 800 V.

As a result of a demand for power from the electric motor 20, the intermediate circuit voltage U_{ZK} falls below the nominal intermediate circuit voltage U_{Zk,nom}, as a result of which the rectifier 31 feeds the DC link 33 from the mains. As a result, the intermediate circuit voltage U_{ZK} increases again to the nominal intermediate circuit voltage U_{ZK,nom} or above.

When the electric motor 20 is operated in a generator mode, energy is fed back into the DC link 33. This leads to an increase in the intermediate circuit voltage U_{ZK}. As soon as a threshold value defined above the nominal intermediate circuit voltage U_{ZK,nom} (e.g. U_{ZK,nom} + 5% or U_{ZK,nom} + 10%) is exceeded, the energy store 38 is charged by the control device 42. The intermediate circuit voltage U_{ZK} is measured and compared with the threshold value by the voltage measuring device 41. The energy store 38 is charged as long as the generator mode continues and the intermediate circuit voltage U_{ZK} is above the nominal intermediate circuit voltage U_{ZK,nom}. The intermediate circuit voltage U_{ZK} that is established is maintained by the energy store 38 until the next demand for power.

When there is a demand for power again from the electric motor 20, energy is taken from the energy store 38 so that it keeps the intermediate circuit voltage U_{ZK} at a voltage level possible for it as long as it can provide energy. As soon as the intermediate circuit voltage U_{ZK} falls below the nominal intermediate circuit voltage U_{ZK,nom} again due to the discharge of the energy store 37, the DC link 33 is fed again by the rectifier 31.

Although the control apparatus 22 and the control device 42 of the energy storage system 37 are shown as different components in Fig. 5, the respective control functions could also be taken over by a central control device.

The drive controller described here is implemented for each electric motor in the control cabinet 19 already described above. In a first alternative, a drive controller is provided for each electric motor, i.e. for each actuator system, and has a DC link with its own associated energy storage system 37.

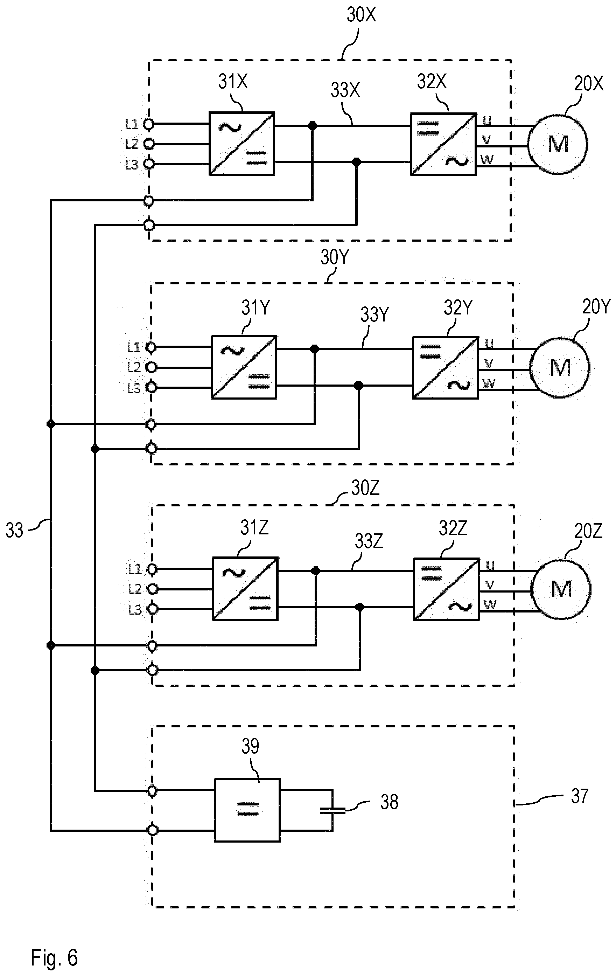

In the further exemplary embodiment illustrated in Fig. 6, each electric motor 20X, 20Y, 20Z for the plurality of actuator systems of the laser machining tool 100 has an associated drive controller 30X, 30Y, 30Z in each case in the manner described above, wherein the drive controllers 30X, 30Y, 30Z, however, share a common energy storage system 37. In other words, the energy storage system 37 is connected to each of the DC links 33X, 33Y, 33Z, which form a common DC link 33.

A laser machining tool 100 designed according to the invention requires less energy to operate than conventional laser machining tools and thereby reduces the load on the supply network feeding it. Since the primary power consumption of the drive controllers 30 is reduced, the power that has to be converted from the feeding mains in the DC link 33 is also reduced. This reduces the waste heat output of the components of the drive controllers 30 in the control cabinet 19. Less waste heat reduces the thermal load and reduces the necessary cooling power for the control cabinet 19. This not only has a positive effect on energy efficiency, but also on the manufacturing costs of the laser machining tool and the service life of the drive controller components.

### List of reference signs

- 100: Laser machining tool
- 1: Machining device
- 2: Movable carriage
- 3: Machining unit
- 5: Housing
- 9: Guide means
- 10: Bridge
- 11: Z-axis cable carrier
- 12: Cladding
- 13: Slot
- 14: Frame
- 15, 15': Frame support
- 16: Laser light source
- 17: Y-axis cable carrier
- 18: X-axis cable carrier
- 19: Control cabinet
- 20: Electric motor
- 20X, 20Y, 20Z: Electric motor for movement in x, y, z directions
- 21: Measuring apparatus
- 22: Control apparatus
- 30: Drive controller (converter)
- 30X, 30Y, 30Z: Drive controller (converter) for electric motors 20X, 20Y, 20Z
- 31: Rectifier
- 31D: Rectifying element
- 31G: (Smoothing) capacitor
- 32: Inverter
- 32W: Controllable switching element
- 33: DC link
- 34: (Braking) resistor
- 35: Controllable switching element
- 36: Measuring and control device
- 37: Energy storage system
- 38: Energy store
- 39: Measuring and control device
- 40: DC-to-DC converter
- 41: Voltage measuring device
- 42: Control device
- L1, L2, L3: Mains phases
- U, V, W: Motor phases
- U_{ZK}: Intermediate circuit voltage

## Claims

1. A laser machining tool (100), in particular a laser cutting machine, having a machining unit (3) that can be moved linearly in at least one direction (x, y, z) relative to a working plane of the laser machining tool (100) by means of an electric motor (20; 20X, 20Y, 20Z), wherein each of the electric motors (20; 20X, 20Y, 20Z) is supplied with energy during operation from an associated drive controller (30; 30X, 30Y, 30Z) **characterised in that**
the associated drive controller (30; 30X, 30Y, 30Z) comprises a DC link (33), wherein
the DC link (33) has an energy storage system (37) which is designed to temporarily store braking energy of an electric motor (20; 20X, 20Y, 20Z) fed into the DC link (33) during operation of the laser machining tool (100) and, when there is a demand for power from an electric motor (20; 20X, 20Y, 20Z), to release the temporarily stored energy into the DC link (33) to drive said electric motor.

2. The laser machining tool (100) according to claim 1, **characterised in that** the energy storage system (37) has an energy store (38) which is connected to the DC link (33) via a DC-to-DC converter (40) of the energy storage system (37).

3. The laser machining tool (100) according to claim 1 or 2, **characterised in that** the energy storage system (37) has a capacitive energy store (38), in particular a capacitor or a supercapacitor, or a rechargeable battery as the energy store (38).

4. The laser machining tool (100) according to claim 1 or 2, **characterised in that** the energy storage system (37) has a mass inertia store as the energy store (38).

5. The laser machining tool (100) according to any one of the preceding claims, **characterised in that** the energy storage system (37) has a voltage measuring device (41) for determining the intermediate circuit voltage (U_{ZK}) and a control device (42), to which the intermediate circuit voltage (U_{ZK}) of the control device (42) detected by the voltage measuring device (41) is supplied as input information, wherein the control device (42) is designed to control the energy flow direction, in particular by controlling the DC-to-DC converter (40), from or into the DC link (33) according to a comparison of the intermediate circuit voltage (U_{ZK}) with at least one predetermined threshold value.

6. The laser machining tool (100) according to claim 5, **characterised in that** the predetermined threshold value is greater than a nominal intermediate circuit voltage (U_{ZK}).

7. The laser machining tool (100) according to claim 6, **characterised in that** the predetermined threshold value is between 5% and 10% larger than the nominal intermediate circuit voltage (U_{ZK}).

8. The laser machining tool (100) according to claim 6 or 7, **characterised in that** the nominal intermediate circuit voltage (U_{ZK}) is between 600 V and 800 V.

9. The laser machining tool (100) according to any one of claims 1 to 8, **characterised in that** in the case of a plurality of electric motors (20X, 20Y, 20Z) each associated drive controller (30X, 30Y, 30Z) has its own energy storage system (37).

10. The laser machining tool (100) according to any one of claims 1 to 8, **characterised in that** in the case of a plurality of electric motors (20X, 20Y, 20Z) all drive controllers (30X, 30Y, 30Z) use a common intermediate circuit (33), wherein a common energy storage system (37) is connected to the common intermediate circuit (33).

11. A method for operating a laser machining tool (100), in particular a laser cutting machine, having a machining unit (3) which can be moved linearly in at least one direction relative to a working plane of the laser machining tool (100) by means of an electric motor (20; 20X, 20Y, 20Z) in each case, wherein each of the electric motors (20; 20X, 20Y, 20Z) is supplied with energy during operation from an associated drive controller (30; 30X, 30Y, 30Z), **characterised in that**
the associated drive controller (30; 30X, 30Y, 30Z) comprises a DC link (33), wherein the DC link (33) has an energy storage system (37), in which,
during operation of the laser machining tool (100), braking energy of an electric motor (20; 20X, 20Y, 20Z) fed into the DC link (33) is temporarily stored, and the temporarily stored energy is released into the DC link (33), when there is a demand for power from an electric motor (20; 20X, 20Y, 20Z), to drive said electric motor.

12. The method according to claim 11, in which a voltage measuring device of the energy storage system (37) determines the intermediate circuit voltage (U_{ZK}) and feeds this to a control device (42) as input information, wherein the control device (42) controls the energy flow direction from or into the DC link (33) according to a comparison of the intermediate circuit voltage (U_{ZK}) with a predetermined threshold value.

## Patentansprüche

1. Laserbearbeitungsmaschine (100), insbesondere Laserschneidmaschine, mit einer Bearbeitungseinheit (3), die mittels eines Elektromotors (20; 20X, 20Y, 20Z) linear in mindestens einer Richtung (x, y, z) relativ zu einer Arbeitsebene der Laserbearbeitungsmaschine (100) bewegt werden kann, wobei jeder der Elektromotoren (20; 20X, 20Y, 20Z) während des Betriebs von einer zugehörigen Antriebssteuerung (30; 30X, 30Y, 30Z) mit Energie versorgt wird,
**dadurch gekennzeichnet, dass**
die zugehörige Antriebssteuerung (30; 30X, 30Y, 30Z) einen DC-Zwischenkreis (33) umfasst, wobei der DC-Zwischenkreis (33) ein Energiespeichersystem (37) aufweist, das dazu ausgelegt ist, die Bremsenergie eines Elektromotors (20; 20X, 20Y, 20Z), die während des Betriebs der Laserbearbeitungsmaschine (100) in den DC-Zwischenkreis (33) eingespeist wird, vorübergehend zu speichern und, wenn ein Bedarf an Leistung von einem Elektromotor (20; 20X, 20Y, 20Z) besteht, die vorübergehend gespeicherte Energie in den DC-Zwischenkreis (33) freizusetzen, um den Elektromotor anzutreiben.

2. Laserbearbeitungsmaschine (100) nach Anspruch 1, **dadurch gekennzeichnet, dass** das Energiespeichersystem (37) einen Energiespeicher (38) aufweist, der über einen DC/DC-Wandler (40) des Energiespeichersystems (37) mit dem DC-Zwischenkreis (33) verbunden ist.

3. Laserbearbeitungsmaschine (100) nach Anspruch 1 oder 2, **dadurch gekennzeichnet, dass** das Energiespeichersystem (37) einen kapazitiven Energiespeicher (38), insbesondere einen Kondensator oder einen Superkondensator, oder eine wiederaufladbare Batterie als Energiespeicher (38) aufweist.

4. Laserbearbeitungsmaschine (100) nach Anspruch 1 oder 2, **dadurch gekennzeichnet, dass** das Energiespeichersystem (37) einen Massenträgheitsspeicher als Energiespeicher (38) aufweist.

5. Laserbearbeitungsmaschine (100) nach einem der vorhergehenden Ansprüche, **dadurch gekennzeichnet, dass** das Energiespeichersystem (37) eine Spannungsmessvorrichtung (41) zum Bestimmen der Zwischenkreisspannung (U_{ZK}) und eine Steuervorrichtung (42) aufweist, der die von der Spannungsmessvorrichtung (41) erfasste Zwischenkreisspannung (U_{ZK}) der Steuervorrichtung (42) als Eingabeinformation zugeführt wird, wobei die Steuervorrichtung (42) dazu ausgelegt ist, die Energieflussrichtung aus dem oder in den Zwischenkreis (33) insbesondere durch Steuern des DC/DC-Wandlers (40) gemäß einem Vergleich der Zwischenkreisspannung (U_{ZK}) mit mindestens einem vorbestimmten Schwellenwert zu steuern.

6. Laserbearbeitungsmaschine (100) nach Anspruch 5, **dadurch gekennzeichnet, dass** der vorbestimmte Schwellenwert größer als eine Zwischenkreis-Nennspannung (U_{ZK}) ist.

7. Laserbearbeitungsmaschine (100) nach Anspruch 6, **dadurch gekennzeichnet, dass** der vorbestimmte Schwellenwert um 5 % bis 10 % größer als die Zwischenkreis-Nennspannung (U_{ZK}) ist.

8. Laserbearbeitungsmaschine (100) nach Anspruch 6 oder 7, **dadurch gekennzeichnet, dass** die Zwischenkreis-Nennspannung (U_{ZK}) zwischen 600 V und 800 V liegt.

9. Laserbearbeitungsmaschine (100) nach einem der Ansprüche 1 bis 8, **dadurch gekennzeichnet, dass** im Falle einer Vielzahl von Elektromotoren (20X, 20Y, 20Z) jede zugehörige Antriebssteuerung (30X, 30Y, 30Z) über ihr eigenes Energiespeichersystem (37) verfügt.

10. Laserbearbeitungsmaschine (100) nach einem der Ansprüche 1 bis 8, **dadurch gekennzeichnet, dass** im Falle einer Vielzahl von Elektromotoren (20X, 20Y, 20Z) alle Antriebssteuerungen (30X, 30Y, 30Z) einen gemeinsamen Zwischenkreis (33) verwenden, wobei ein gemeinsames Energiespeichersystem (37) mit dem gemeinsamen Zwischenkreis (33) verbunden ist.

11. Verfahren zum Betreiben einer Laserbearbeitungsmaschine (100), insbesondere einer Laserschneidmaschine, mit einer Bearbeitungseinheit (3), die mittels eines Elektromotors (20; 20X, 20Y, 20Z) linear in mindestens einer Richtung relativ zu einer Arbeitsebene der Laserbearbeitungsmaschine (100) bewegt werden kann, wobei jeder der Elektromotoren (20; 20X, 20Y, 20Z) während des Betriebs von einer zugehörigen Antriebssteuerung (30; 30X, 30Y, 30Z) mit Energie versorgt wird,
**dadurch gekennzeichnet, dass**
die zugehörige Antriebssteuerung (30; 30X, 30Y, 30Z)
einen DC-Zwischenkreis (33) umfasst, wobei der DC-Zwischenkreis (33) ein Energiespeichersystem (37) aufweist, in dem während des Betriebs der Laserbearbeitungsmaschine (100) die Bremsenergie eines Elektromotors (20; 20X, 20Y, 20Z), die in den DC-Zwischenkreis (33) eingespeist wird, vorübergehend gespeichert wird und die vorübergehend gespeicherte Energie in den DC-Zwischenkreis (33) freigesetzt wird, wenn ein Bedarf an Leistung von einem Elektromotor (20; 20X, 20Y, 20Z) besteht, um den Elektromotor anzutreiben.

12. Verfahren nach Anspruch 11, wobei eine Spannungsmessvorrichtung des Energiespeichersystems (37) die Zwischenkreisspannung (U_{ZK}) bestimmt und diese als Eingabeinformation in eine Steuervorrichtung (42) eingibt, wobei die Steuervorrichtung (42) die Energieflussrichtung aus dem oder in den DC-Zwischenkreis (33) gemäß einem Vergleich der Zwischenkreisspannung (U_{ZK}) mit einem vorbestimmten Schwellenwert steuert.

## Revendications

1. Machine d'usinage laser (100), en particulier machine de découpe laser, ayant une unité d'usinage (3) pouvant être déplacée linéairement dans au moins un sens (x, y, z) par rapport à un plan de travail de la machine d'usinage laser (100) au moyen d'un moteur électrique (20 ; 20X, 20Y, 20Z), dans laquelle chacun des moteurs électriques (20 ; 20X, 20Y, 20Z) est alimenté en énergie pendant son fonctionnement par un dispositif de commande d'entraînement associé (30 ; 30X, 30Y, 30Z)
**caractérisée en ce que**
le dispositif de commande d'entraînement associé (30 ; 30X, 30Y, 30Z) comprend une liaison CC (33), la liaison CC (33) ayant un système de stockage d'énergie (37) qui est conçu pour stocker temporairement l'énergie de freinage d'un moteur électrique (20 ; 20X, 20Y, 20Z) alimenté dans la liaison CC (33) pendant le fonctionnement de la machine d'usinage laser (100) et, lorsqu'il y a une demande de puissance d'un moteur électrique (20 ; 20X, 20Y, 20Z), pour libérer l'énergie temporairement stockée dans la liaison CC (33) pour entraîner ledit moteur électrique.

2. Machine d'usinage laser (100) selon la revendication 1, **caractérisée en ce que** le système de stockage d'énergie (37) a un stockage d'énergie (38) qui est connecté à la liaison CC (33) par l'intermédiaire d'un convertisseur CC-CC (40) du système de stockage d'énergie (37).

3. Machine d'usinage laser (100) selon la revendication 1 ou 2, **caractérisée en ce que** le système de stockage d'énergie (37) a un stockage d'énergie capacitif (38), en particulier un condensateur ou un supercondensateur, ou une batterie rechargeable comme stockage d'énergie (38).

4. Machine d'usinage laser (100) selon la revendication 1 ou 2, **caractérisée en ce que** le système de stockage d'énergie (37) a un stockage d'inertie de masse comme stockage d'énergie (38).

5. Machine d'usinage laser (100) selon l'une quelconque des revendications précédentes, **caractérisée en ce que** le système de stockage d'énergie (37) a un dispositif de mesure de tension (41) pour déterminer la tension de circuit intermédiaire (U_{ZK}) et un dispositif de commande (42), auquel est fournie en tant qu'informations d'entrée la tension de circuit intermédiaire (U_{ZK}) du dispositif de commande (42) détectée par le dispositif de mesure de tension (41), dans laquelle le dispositif de commande (42) est conçu pour commander le sens de circulation d'énergie, en particulier en commandant le convertisseur CC-CC (40), depuis ou vers la liaison CC (33), selon une comparaison de la tension de circuit intermédiaire (U_{ZK}) avec au moins une valeur seuil prédéterminée.

6. Machine d'usinage laser (100) selon la revendication 5, **caractérisée en ce que** la valeur seuil prédéterminée est supérieure à une tension de circuit intermédiaire nominale (U_{ZK}).

7. Machine d'usinage laser (100) selon la revendication 6, **caractérisée en ce que** la valeur seuil prédéterminée est supérieure de 5 % à 10 % à la tension de circuit intermédiaire nominale (U_{ZK}).

8. Machine d'usinage laser (100) selon la revendication 6 ou 7, **caractérisée en ce que** la tension de circuit intermédiaire nominale (U_{ZK}) se situe entre 600 V et 800 V.

9. Machine d'usinage laser (100) selon l'une quelconque des revendications 1 à 8, **caractérisée en ce que**, dans le cas d'une pluralité de moteurs électriques (20X, 20Y, 20Z), chaque dispositif de commande d'entraînement associé (30X, 30Y, 30Z) a son propre système de stockage d'énergie (37).

10. Machine d'usinage laser (100) selon l'une quelconque des revendications 1 à 8, **caractérisée en ce que**, dans le cas d'une pluralité de moteurs électriques (20X, 20Y, 20Z), tous les dispositifs de commande d'entraînement (30X, 30Y, 30Z) utilisent un circuit intermédiaire commun (33), dans laquelle un système de stockage d'énergie commun (37) est connecté au circuit intermédiaire commun (33).

11. Procédé de fonctionnement d'une machine d'usinage laser (100), en particulier d'une machine de découpe laser, ayant une unité d'usinage (3) qui peut être déplacée linéairement dans au moins un sens par rapport à un plan de travail de la machine d'usinage laser (100) au moyen d'un moteur électrique (20 ; 20X, 20Y, 20Z) dans chaque cas, dans lequel chacun des moteurs électriques (20 ; 20X, 20Y, 20Z) est alimenté en énergie pendant son fonctionnement par un dispositif de commande d'entraînement associé (30 ; 30X, 30Y, 30Z),
**caractérisé en ce que**
le dispositif de commande d'entraînement associé (30 ; 30X, 30Y, 30Z) comprend une liaison CC (33), dans lequel la liaison CC (33) a un système de stockage d'énergie (37), dans lequel, pendant le fonctionnement de la machine d'usinage laser (100), l'énergie de freinage d'un moteur électrique (20 ; 20X, 20Y, 20Z) alimentée dans la liaison CC (33) est temporairement stockée, et l'énergie temporairement stockée est libérée dans la liaison CC (33), lorsqu'il y a une demande de puissance d'un moteur électrique (20 ; 20X, 20Y, 20Z), pour entraîner ledit moteur électrique.

12. Procédé selon la revendication 11, dans lequel un dispositif de mesure de tension du système de stockage d'énergie (37) détermine la tension de circuit intermédiaire (U_{ZK}) et la fournit à un dispositif de commande (42) en tant qu'informations d'entrée, dans lequel le dispositif de commande (42) commande le sens de circulation d'énergie depuis ou vers la liaison CC (33) selon une comparaison de la tension de circuit intermédiaire (U_{ZK}) avec une valeur seuil prédéterminée.
